# EUROPÄISCHE PATENTSCHRIFT

(11) **EP 1 211 943 B1**
(45) Veröffentlichungstag und Bekanntmachung des Hinweises auf die Patenterteilung: **12.11.2003**
(21) Anmeldenummer: 00991766.7
(22) Anmeldetag: 19.07.2000
(51) Int. Cl.: A21B 1/26, F24C 15/32

(54) **VERFAHREN UND VORRICHTUNG ZUR VERGLEICHMÄSSIGUNG DES ENERGIEEINTRAGS IN GARGUT**
METHOD AND DEVICE FOR HOMOGENISING THE ENERGY SUPPLY TO PRODUCTS TO BE COOKED
PROCEDE ET DISPOSITIF POUR UNIFORMISER L'APPORT D'ENERGIE DANS UN MATERIAU A CUIRE

(30) Priorität: 15.09.1999 DE 19944265
(43) Veröffentlichungstag der Anmeldung: 12.06.2002
(73) Patentinhaber: Rational AG, 86899 Landsberg am Lech (DE)
(72) Erfinder: KOHLSTRUNG, Peter, D-86830 Kaufering (DE)
(74) Vertreter: Weber-Bruls, Dorothée, Dr.
(86) Internationale Anmeldenummer: DE0002087
(87) Internationale Veröffentlichungsnummer: WO01019193

(56) Entgegenhaltungen:
- DE-A- 2 709 068
- DE-B- 1 206 824
- US-A- 4 308 853
- US-A- 4 537 118

## Beschreibung

Die Erfindung betrifft ein Verfahren zur Vergleichmäßigung des Energieeintrags in Gargut, das in dem Garraum eines Gargeräts auf zumindest einem Behälter, wie einem Backblech, einem Rost oder dergleichen, gegart wird, durch Führen der Garraumatmosphäre über den Behälter, insbesondere über dessen Schmalseite, im wesentlichen ausschließlich längs einer Vielzahl von im wesentlichen parallel zueinander verlaufenden Strömungspfaden und periodisches Umkehren der Blasrichtung, und eine Vorrichtung zur Vergleichmäßigung des Energieeintrags in Gargut, das in dem Garraum eines Gargeräts auf zumidnest einem Behälter, wie einem Backblech, Rost oder dergleichen, garbar ist, insbesondere verwendend ein erfindungsgemäßes Verfahren.

Herkömmlicherweise wird Gargut auf einem Backblech, einem Rost oder dergleichen in einem Gargerät zubereitet, bei dessen Ausgestaltung insbesondere darauf Wert gelegt wird, daß eine gute Wärmeleitung vorliegt, um-einen-möglichst gleichmäßigen Energieeintrag und somit ein möglichst gleichmäßiges Garen des Gargutes zu erhalten. Jedoch kann eine noch so optimale Wärmeleitung des Backblechs, Rosts oder dergleichen an sich nicht dazu führen, daß in der Tat ein gleichmäßiger Energieeintrag stattfindet, da das Garen stets von zirkulierender Heißluft und/oder zirkulierendem Dampf unterstützt wird, wobei die entsprechende Zirkulation über ein Gebläse erzwungen wird. Die gemäß dem Stand der Technik erzwungene Zirkulation führt mehr oder weniger zu einer Strömung mit horizontalem Parabelverlauf über die Backbleche, Roste oder dergleichen sowie zusätzlich einem erheblichen vertikalen Strömungsanteil.

Ein gattungsgemäßes Verfahren bzw. eine gattungsgemäße Vorrichtung ist aus der DE 27 09 068 A1 bekannt, wobei eine Gebläseanordnung aus zwei Querstromgebläsen zum Einsatz kommt. Zwei Querstromgebläse fordern jedoch einen komplizierten Aufbau und können noch stets keine zufriedenstellende Vergleichmäßigung des Energieeintrags gewährleisten.

Aufgabe der vorliegenden Erfindung ist es, das gattungsgemäße Verfahren sowie die gattungsgemäße Vorrichtung zur Vergleichmäßigung des Energieeintrags in Gargut derart weiterzuentwickeln, daß die Nachteile des Stands der Technik überwunden überwunden werden.

Die das Verfahren betreffende Aufgabe wird erfindungsgemäß dadurch gelöst, daß die Zirkulation der Garraumatmosphäre durch eine Rootspumpe, welche vorzugsweise von einem Motor angetrieben ist, erzwungen wird.

Dabei ist bevorzugt, daß die Strömungen längs der Strömungspfade mit im wesentlichen gleichen Druckgradienten über den Behälter verlaufen.

Ferner wird erfindungsgemäß vorgeschlagen, daß die Strömungsgeschwindigkeit gargutspezifisch, jedoch beschickungsunabhängig eingestellt, vorzugsweise geregelt, wird.

Weiterhin kann gemäß der Erfindung vorgesehen sein, daß die Strömungen längs der Strömungspfade an den Eintrittspforten in den Bereich des Behälters im wesentlichen auf der gleichen Temperatur gehalten werden.

Erfindungsgemäß bevorzugt ist dabei, daß mehrere Behälter in dem Garraum übereinander angeordnet werden, und relativ zu jedem Behälter im wesentlichen die gleichen Strömungspfade der Garraumatmosphäre erzwungen werden.

Der die Vorrichtung betreffende Aufgabenteil wird gelöst durch zumindest eine Rootspumpe zum Führen der Garraumatmosphäre abwechselnd in einer von zwei zueinander entgegengesetzten Blasrichtungen und eine Vielzahl von Führungsmitteln, wie Leitbleche, Drosseln oder dergleichen, zur Vergleichmäßigung des Drucks der Strömungen über den Behälter sowie zum Führen der Strömungen längs einer Vielzahl von im wesentlichen parallel zueinander verlaufenden Strömungspfaden über den Behälter, insbesondere über die Schmalseite des Behälters.

Es kann dabei vorgesehen sein, daß die Rootspumpe, vorzugsweise stufenlos, regelbar ist.

Ferner wird erfindungsgemäß vorgeschlagen, daß die Führungsmittel längs zweier, einander gegenüberliegender Längsseiten des Behälters, vorzugsweise gleichmäßig, angeordnet sind.

Weiterhin kann vorgesehen sein, daß die Führungsmittel, vorzugsweise stufenlos, regelbar sind.

Die Führungsmittel können Düsen umfassen.

Ferner ist vorgesehen, daß eine Heizung zum Regeln der Temperatur der Strömungen am Austrittsende der Führungsmittel, vorzugsweise stufenlos, einstellbar ist.

Eine erfindungsgemäße Ausführungsform ist dadurch gekennzeichnet, daß eine Vielzahl von Behältern in den Garraum einbringbar sind, insbesondere über ein Hordengestell oder einen Hordengestellwagen, jedem Behälter die gleiche Anzahl von Führungsnütteln zugeordnet ist, und die Rootspumpe in gleicher relativer Anordnung zu jedem der Behälter arbeitet.

Der Erfindung liegt somit die überraschende Erkenntnis zugrunde, daß im wesentlichen durch Vermeidung von senkrecht zu der Ausbreitungsrichtung des Gargutbehälters beziehungsweise der Gargutbehälter, also herkömmlicherweise vertikal verlaufender Strömung und Reduzierung der im wesentlichen horizontalen Strömungswege über den beziehungsweise die Gargutbehälter, nämlich durch Erzwingung paralleler Strömungen unter Einsatz einer Rootspumpe über Führungsmittel, abwechselnd in entgegengesetzten Blasrichtungen, gargutspezifisch die Garraumatmosphäre zum Erhalten einer gleichmäßig gegarten Charge an Gargut, unabhängig von der Beschickung, einstellbar, vorzugsweise stufenlos regelbar, ist.

Ferner ist es erfindungsgemäß bevorzugt, Temperatur, Turbulenz, Richtung und Geschwindigkeit der Strömungen über den beziehungsweise die Gargutbehälter, längs den erzwungenen Strömungspfaden, zumindest unmittelbar nach Passieren der Führungsmittel, zu vergleichmäßigen.

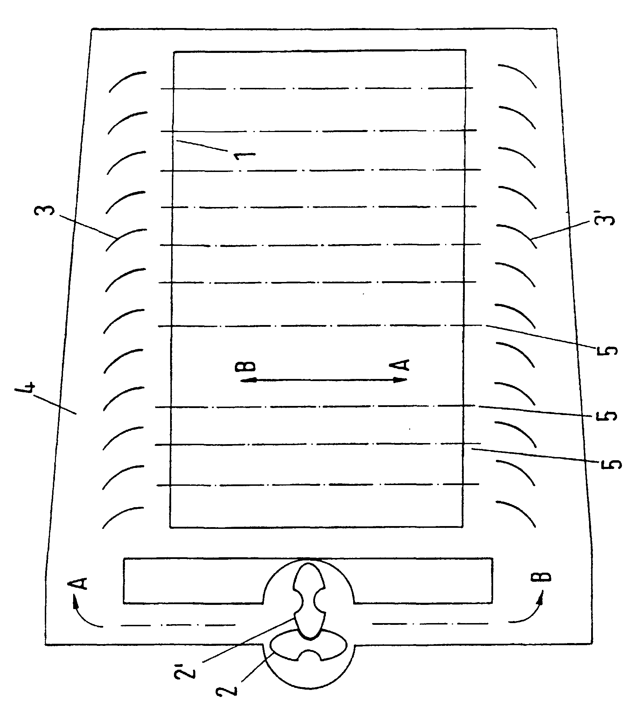

Weitere Merkmale und Vorteile der Erfindung ergeben sich aus der nachfolgenden Beschreibung, in der ein Ausführungsbeispiel der Erfindung anhand einer aus einer einzigen Figur bestehenden schematischen Zeichnung beispielhaft im Einzelnen erläutert ist. Dabei zeigt die Figur einen Horizontalschnitt durch einen Garraum mit einer erfindungsgemäßen Vorrichtung.

Wie der Figur zu entnehmen ist, weist eine erfindungsgemäße Vorrichtung zum Garen von Gargut auf einem Backblech 1 in einem Garraum 4 eine Rootpumpe mit zwei Rotoren 2, 2' sowie eine Vielzahl von Leitblechen 3, 3' auf. Das Backblech 1 kann horizontal über einen nicht gezeigten Hordengestellwagen in dem Garraum 4 angeordnet sein und an zwei Längsseiten gleichmäßig mit den Leitblechen 3, 3' in Verbindung stehen. Die Leitbleche 3, 3' sorgen dafür, daß die über die Rotoren 2, 2' zirkuliert werdende Garraumatmosphäre aus Heißluft und/oder Dampf in parallelen Strömungen, horizontal über das Backblech 1, längs den Strömungspfaden 5, senkrecht zur Längsachse des Backbleches 1, jeweils von einem Leitblech 3 zu dem entsprechend gegenüberliegenden Leitblech 3', verläuft. Zudem ermöglichen die beiden Rotoren 2, 2' auch, daß in einem festgelegten Rhythmus die Blasrichtung um 180° gedreht wird, wie mit den Pfeilen A und B angedeutet. Somit kommt es zu einer Vergleichmäßigung der Strömung durch Minimierung der Länge der Strömungspfade 5 sowie Wechsel zwischen den beiden entgegengesetzten Blasrichtungen A, B, was zu einem gleichmäßigen Eintrag von Energie und somit Garen von Gargut auf dem Backblech 1 führt.

Selbstverständlich können in dem Garraum 4 eine Vielzahl von Backblechen 1 untereinander, sich jeweils horizontal in dem Hordengestellwagen erstreckend, angeordnet sein, jeweils mit Leitblechen in Verbindung stehend und von den Rotoren 2, 2' mit Strömung in zwei Gebläsesrichtungen beaufschlagbar.

Die in der vorstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Vergleichmäßigung des Energieeintrags in Gargut, das in dem Garraum eines Gargeräts auf zumindest einem Behälter, wie einem Backblech, einem Rost oder dergleichen, gegart wird, durch Führen der Garraumatmosphäre über den Behälter,
insbesondere über dessen Schmalseite, im wesentlichen ausschließlich längs einer Vielzahl von im wesentlichen parallel zueinander verlaufenden Strömungspfaden und periodisches Umkehren der Blasrichtung, **dadurch gekennzeichnet, daß**
die Zirkulation der Garraumatmosphäre durch eine Rootspumpe, welche vorzugsweise von einem Motor angetrieben ist, erzwungen wird.

2. Verfahren nach Anspruch 1, **dadurch gekennzeichnet, daß**
die Strömungen längs der Strömungspfade mit im wesentlichen gleichen Druckgradienten über den Behälter verlaufen.

3. Verfahren nach Anspruch 1 oder 2, **dadurch gekennzeichnet, daß**
die Strömungsgeschwindigkeit gargutspezifisch, jedoch beschickungsunabhängig eingestellt, vorzugsweise geregelt, wird.

4. Verfahren nach einem der vorangehenden Ansprüche, **dadurch gekennzeichnet, daß**
die Strömungen längs der Strömungspfade an den Eintrittspforten in den Bereich des Behälters im wesentlichen auf der gleichen Temperatur gehalten werden.

5. Verfahren nach einem der vorangehenden Ansprüche, **dadurch gekennzeichnet, daß**
mehrere Behälter in dem Garraum übereinander angeordnet werden, und relativ zu jedem Behälter im wesentlichen die gleichen Strömungspfade der Garraumatmosphäre erzwungen werden.

6. Vorrichtung zur Vergleichmäßigung des Energieeintrags in Gargut, das in dem Garraum (4) eines Gargeräts auf zumindest einem Behälter, wie einem Backblech (1), Rost oder dergleichen, garbar ist, insbesondere verwendend ein Verfahren nach einem der vorangehenden Ansprüche, **gekennzeichnet durch**
zumindest eine Rootspumpe (2, 2') zum Führen der Garraumatmosphäre abwechselnd in einer von zwei zueinander entgegengesetzten Blasrichtungen (A,B) und
eine Vielzahl von Führungsmitteln (3, 3'), wie Leitbleche, Drosseln oder dergleichen, zur Vergleichmäßigung des Drucks der Strömungen über den Behälter (1) sowie zum Führen der Strömungen längs einer Vielzahl von im wesentlichen parallel zueinander verlaufenden Strömungspfaden (5) über den Behälter (1), insbesondere über die Schmalseite des Behälters (1).

7. Vorrichtung nach Anspruch 6, **dadurch gekennzeichnet, daß**
die Rootspumpe (2, 2'), vorzugsweise stufenlos, regelbar ist.

8. Vorrichtung nach Anspruch 6 oder 7, **dadurch gekennzeichnet, daß**
die Führungsmittel (3, 3'), längs zweier, einander gegenüberliegenden Längsseiten des Behälters (1), vorzugsweise gleichmäßig, angeordnet sind.

9. Vorrichtung nach einem der Ansprüche 6 bis 8, **dadurch**
**gekennzeichnet, daß** die Führungsmittel (3, 3'), vorzugsweise stufenlos, regelbar sind.

10. Vorrichtung nach einem der Ansprüche 6 bis 9, **dadurch**
**gekennzeichnet, daß** die Führungsmittel (3, 3') Düsen umfassen.

11. Vorrichtung nach einem der Ansprüche 6 bis 10, **dadurch**
**gekennzeichnet, daß** eine Heizung zum Regeln der Temperatur der Strömungen am Austrittsende der Führungsmittel (3, 3'), vorzugsweise stufenlos, einstellbar ist.

12. Vorrichtung nach einem der Ansprüche 6 bis 11, **dadurch**
**gekennzeichnet, daß** eine Vielzahl von Behältern (1) in den Garraum (4) einbringbar sind, insbesondere über ein Hordengestell oder einen Hordengestellwagen,
jedem Behälter die gleiche Anzahl von Führungsmitteln (3, 3') zugeordnet ist, und
die Rootspumpe (2, 2') in gleicher relativer Anordnung zu jedem der Behälter (1) arbeitet.

## Claims

1. A method of equalising the energy input to food for cooking in the cooking chamber of a cooking appliance on at least one container, such as a baking tray, a grill or the like, by passing the cooking chamber atmosphere over the container, particularly over its narrow side, substantially exclusively along a plurality of substantially parallel flow paths and periodic reversal of the blowing direction, **characterised in that** the circulation of the cooking chamber atmosphere is forced by means of a Roots blower, which is preferably driven by a motor.

2. A method according to claim 1, **characterised in that** the flows extend along the flow paths with substantially equal pressure gradients over the container.

3. A method according to claim 1 or 2, **characterised in that** the flow speed is adjusted, preferably regulated, specifically according to the food for cooking but independently of the charge.

4. A method according to any one of the preceding claims, **characterised in that** the flows along the flow paths are kept at substantially the same temperature at the entry ports to the region of the container.

5. A method according to any one of the preceding claims, **characterised in that** a plurality of containers are disposed one above the other in the cooking chamber and substantially the same flow paths of the cooking chamber atmosphere are forced relatively to each container.

6. Apparatus for equalising the energy input to food for cooking in the cooking chamber (4) of a cooking appliance on at least one container, such as a baking tray (1), grill or the like, particularly using a method according to any one of the preceding claims, **characterised by** at least one Roots blower (2,2') for passing the cooking chamber atmosphere alternately in one of two opposite blowing directions (A,B) and a plurality of guide means (3,3') such as baffles, restrictors or the like for equalising the pressure of the flows over the container (1) and for guiding the flows along a plurality of substantially parallel flow paths (5) over the container (1), particularly over the narrow side of the container (1).

7. Apparatus according to claim 6, **characterised in that** the Roots blower (2,2') is adapted to be regulated, preferably steplessly.

8. Apparatus according to claim 6 or 7, **characterised in that** the guide means (3,3') are disposed, preferably uniformly, along two opposite longitudinal sides of the container (1).

9. Apparatus according to any one of claims 6 to 8, **characterised in that** the guide means (3,3') are adapted to be regulated, preferably steplessly.

10. Apparatus according to any one of claims 6 to 9, **characterised in that** the guide means (3,3') comprise nozzles.

11. Apparatus according to any one of claims 6 to 10, **characterised in that** a heating means is adjustable, preferably steplessly, in order to regulate the temperature of the flows at the outlet end of the guide means (3,3').

12. Apparatus according to any one of claims 6 to 11, **characterised in that** a plurality of containers (1) can be introduced into the cooking chamber (4) particularly via a latticework frame or a latticework trolley, the same number of guide means (3,3') is associated with each container and the Roots blower operates in the same relative arrangement to each of the containers (1).

## Revendications

1. Procédé pour uniformiser l'apport d'énergie dans un produit à cuire, cuit dans l'enceinte de cuisson d'un appareil de cuisson, sur au moins un réceptacle tel qu'une tôle de cuisson, une grille ou analogue, par guidage de l'atmosphère de l'enceinte de cuisson sur le réceptacle, en particulier sur son côté étroit, essentiellement exclusivement le long d'une pluralité de chemins d'écoulement s'étendant sensiblement parallèlement les uns aux autres et par inversion périodique du sens de soufflage, **caractérisé en ce que** la circulation de l'atmosphère de l'enceinte de cuisson est produite de façon forcée par une pompe roots, entraînée de préférence par un moteur.

2. Procédé selon la revendication 1, **caractérisé en ce que** les écoulements s'étendent le long des chemins d'écoulement au-dessus du réceptacle, avec des gradients de pression sensiblement identiques.

3. Procédé selon la revendication 1 ou 2, **caractérisé en ce que** la vitesse d'écoulement est réglée, de préférence régulée, de façon spécifique au produit à cuire, mais cependant indépendamment du garnissage.

4. Procédé selon l'une des revendications précédentes, **caractérisé en ce que** les écoulements le long des chemins d'écoulement, aux portes d'entrée dans la zone du réceptacle, sont maintenus sensiblement à la même température.

5. Procédé selon l'une des revendications précédentes, **caractérisé en ce que** plusieurs réceptacles sont disposés les uns au-dessus des autres dans l'enceinte de cuisson et sensiblement les mêmes chemins d'écoulement de l'atmosphère de l'enceinte de cuisson sont imposés de façon forcée par rapport à chaque réceptacle.

6. Dispositif pour uniformiser l'apport d'énergie dans un matériau à cuire, qui est susceptible d'être cuit dans l'enceinte de cuisson (4) d'un appareil de cuisson, sur au moins un réceptacle tel qu'une tôle de cuisson (1), une grille ou analogue, en particulier en utilisant un procédé selon l'une des revendications précédentes, **caractérisé par** au moins une pompe roots (2, 2') pour faire passer l'atmosphère de l'enceinte de cuisson en alternance dans l'un de deux sens de soufflage (A,B) opposés l'un à l'autre, et une pluralité de moyens de guidage (3, 3') tel que des tôles de guidage, des éléments d'étranglement ou analogues, pour homogénéiser la pression des écoulements sur les réceptacles, ainsi que pour guider les écoulements le long d'une pluralité de chemins d'écoulement (5) s'étendant, sensiblement parallèlement les uns aux autres sur le réceptacle (1) en particulier sur le côté étroit du réceptacle (1).

7. Dispositif selon la revendication 6, **caractérisé en ce que** la pompe roots (2,2') est susceptible d'être réglée de préférence de façon progressive continue.

8. Dispositif selon la revendication 6 ou 7 **caractérisé en ce que** les moyens de guidage (3,3') sont disposés de préférence régulièrement le long de deux côtés longitudinaux, opposés l'un à l'autre, du réceptacle (1).

9. Dispositif selon une des revendications 6 à 8, **caractérisé en ce que** les moyens de guidage (3,3') sont réglables de préférence de façon progressive continue.

10. Dispositif selon une des revendications 6 à 9, **caractérisé en ce que** les moyens de guidage (3,3') comprennent des buses.

11. Dispositif selon une des revendications 6 à 10, **caractérisé en ce qu'**un chauffage, servant à régler la température des écoulements à l'extrémité de sortie des moyens de guidage (3,3'), est réglable, de préférence de façon progressive continue.

12. Dispositif selon une des revendications 6 à 8, **caractérisé en ce qu'**une pluralité de réceptacles (1) sont susceptibles d'être introduits dans l'enceinte de cuisson (4), en particulier sur un bâti de claies, ou un chariot à bâtis de claies, à chaque réceptacle étant associé le même nombre de moyens de guidage (3,3'), et la pompe roots (2,2') travaillant selon le même agencement relatif par rapport à chacun des réceptacles (1).
